# EUROPEAN PATENT APPLICATION

(11) **EP 4 610 096 A1**
(43) Date of publication of application: **03.09.2025**
(21) Application number: 23875128.3
(22) Date of filing: 21.09.2023
(51) Int. Cl.: B60L 53/30, B60L 53/60, A62C 3/16, A62C 37/36, A62C 37/08, G08B 17/00

(54) **MOBILITY PRODUCT CHARGING APPARATUS CAPABLE OF SELF-EXTINGUISHING FIRE**

(30) Priority: 04.10.2022 KR 20220126055
(71) Applicant: Choi, Jangsik, Seoul 01673 (KR)
(72) Inventor: Choi, Jangsik, Seoul 01673 (KR)
(74) Representative: Cabinet Chaillot
(86) International application number: PCT/KR2023/014448
(87) International publication number: WO 2024/076062

(57) **Abstract**

Disclosed are a mobility product charging apparatus and method for self-extinguishing fire. According to an embodiment of the present disclosure, a mobility product charging apparatus with a fire-extinguishing function includes: a fire-extinguishing tank which is located at an upper portion and is for storing and moving a cooling agent for extinguishing fire; and one or more charging booths which are located at a lower portion and designed for charging and storing mobility products, wherein the fire-extinguishing tank and each of the one or more charging booths are connected through a discharge tube. When a fire occurs in a specific charging booth from among the one or more charging booths, charging of a mobility product in the specific charging booth is stopped, and a discharge lever corresponding to the specific charging booth is automatically opened so that the cooling agent is injected from the fire-extinguishing tank to the specific charging booth through the discharge tube and the fire-extinguishing function is performed.

## Description

### [Technical Field]

The present disclosure relates to a mobility product charging apparatus for self-extinguishing fire.

### [Background Art]

The number of mobility products driven based on a battery, such as electric vehicles, electric scooters, electric kickboards, electric bicycles, drones, etc., is increasing every year.

In this regard, when a fire occurs while charging a mobility product, damage to life and property is very severe, and it is also becoming a social issue.

In particular, in the case of a mobility product for one person that is easy to move around, such as an electric scooter, an electric kickboard, an electric bicycle, etc., it is common to charge a battery by connecting the mobility product to a charger at home. An action of separating a battery of the electric scooter, the electric kickboard, the electric bicycle, etc. and charging the battery in a place where fire extinguishing equipment is not provided (such as inside a house) is exposed to a fire risk and is so dangerous that an entire building can be entirely burned down when a fire occurs.

Due to characteristics of a battery, there is a very high risk of explosion due to overcharging during charging, and battery charging in a state where there is no fire extinguishment safety device may cause a very dangerous fire. Fire damage caused by thermal runaway according to these battery characteristics is increasing every year. In particular, fire caused by batteries is very difficult to extinguish in a short period of time even when using running water or a fire truck, and the explosive power thereof is so strong and dangerous that the fire can only be extinguished when the thermal runaway of all the battery cells ends.

In the case of an existing mobility product charging apparatus, it is a simple charging/storage type apparatus, and a way of extinguishing fire by dispatching firefighters when a fire occurs is applied.

### [Disclosure]

### [Technical Problem]

A technical problem of the present disclosure is to provide a charging/storage apparatus for self-extinguishing fire when a fire occurs during charging and/or storage of a mobility product.

Technical problems to be solved by the present disclosure are not limited to the above-mentioned technical problems, and other technical problems not mentioned may be clearly understood by those skilled in the art to which the present disclosure belongs based on the following description.

### [Technical Solution]

According to one aspect of the present disclosure, there is provided a mobility product charging apparatus having a fire-extinguishing function, which includes a fire-extinguishing tank which is located at an upper portion and is for storing and moving a cooling agent for extinguishing fire and one or more charging booths which are located at a lower portion and designed for charging and storing mobility products, in which the fire-extinguishing tank and each of the one or more charging booths is connected through a discharge tube. When a fire occurs in a specific charging booth from among the one or more charging booths, charging of a mobility product in the specific charging booth is blocked, and a discharge lever corresponding to the specific charging booth is automatically opened so that the cooling agent is injected from the fire-extinguishing tank to the specific charging booth through the discharge tube and the fire-extinguishing function is performed.

### [Advantageous Effects]

According to an embodiment of the present disclosure, by using a charging/storage apparatus for self-extinguishing fire, spreading of a fire can be prevented and life and property damage can be minimized.

The effects obtained in the disclosure are not limited to the effects mentioned above, and other effects that are not mentioned may be clearly understood by those skilled in the art to which the present disclosure belongs based on the following description.

### [Description of Drawings]

The accompanying drawings, which are included as part of the detailed description to assist with understanding the present disclosure, provide embodiments of the present disclosure and describe the technical features of the present disclosure together with the description.
FIG. 1 illustrates a block diagram of apparatuses that constitute a mobility product charging/storage system to which the present disclosure may be applied.
FIG. 2 illustrates a perspective view of a mobility product charging/storage apparatus to which the present disclosure may be applied.
FIG. 3 illustrates a front view of the mobility product charging/storage apparatus to which the present disclosure may be applied.
FIG. 4 illustrates a side view of the mobility product charging/storage apparatus to which the present disclosure may be applied.
FIG. 5 illustrates an operation flowchart of a mobility product charging/storage apparatus to which the present disclosure may be applied.

### [Modes of the Invention]

Hereinafter, preferred embodiments according to the present disclosure will be described in detail with reference to the accompanying drawings. The detailed description disclosed below in conjunction with the accompanying drawings is intended to describe an exemplary embodiment of the present disclosure and is not intended to represent the only embodiment by which the present disclosure may be practiced. The following detailed description includes specific details in order to provide a thorough understanding of the present disclosure. However, those skilled in the art will recognize that the present disclosure may be practiced without these specific details.

In some cases, known structures and apparatuses may be omitted or illustrated in block diagram form focusing on the core functions of each structure and apparatus in order to avoid ambiguity in the concept of the present disclosure.

In the present disclosure, when a component is referred to as being "connected," "coupled," or "joined" to another component, it may include not only a direct connection relationship but also an indirect connection relationship in which another component is present therebetween. The term "comprise" or "have" used in the present disclosure specifies the presence of stated features, steps, operations, elements, and/or components, but does not preclude the presence or addition of one or more other features, steps, operations, elements, components, and/or groups thereof.

In the present disclosure, the terms "first," "second," and the like are used only to distinguish one component from another, are not used to limit the components, and do not limit the order or importance among the components unless specifically stated. Accordingly, a first component in an embodiment within the scope of the present disclosure may be referred to as a second component in another embodiment, and similarly, a second component in an embodiment may be referred to as a first component in another embodiment.

The terms used in the present disclosure are for the purpose of describing specific embodiments and are not intended to limit the claims. As used in the description of the embodiments and the appended claims, the singular forms are intended to include the plural forms as well, unless the context clearly indicates otherwise. The term "and/or" used in the present disclosure may refer to one of associated listed items or refers to and includes any and all possible combinations of two or more of them. In addition, "/" between words in the present disclosure has the same meaning as "and/or" unless stated otherwise.

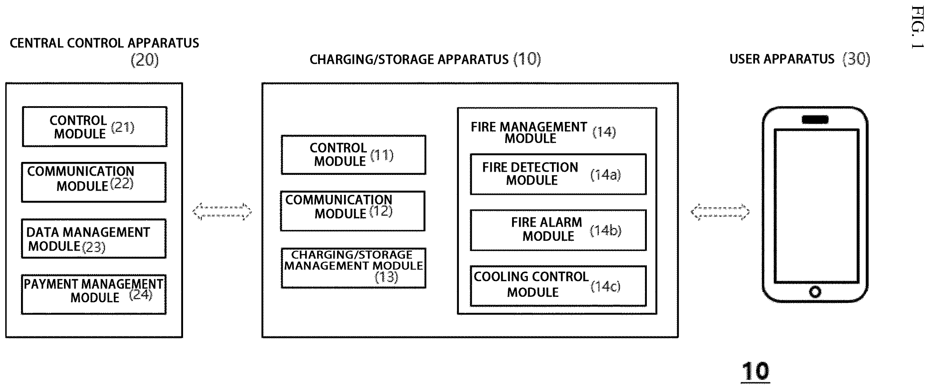

FIG. 1 illustrates a block diagram of apparatuses constituting a mobility product charging/storage system to which the present disclosure may be applied. FIG. 1 is for convenience of description and is not intended to limit the scope of the present invention in the present disclosure.

Referring to FIG. 1, a system for executing self-extinguishing of fire when a fire occurs when performing the charging/storage of a mobility product may include a charging/storage apparatus 10, a central control apparatus 20, and a user apparatus 30. The charging/storage apparatus 10, the central control apparatus 20, and the user apparatus 30 may be connected via wireless communication and may transmit and receive data and/or control information between apparatuses via wireless communication.

First, the charging/storage apparatus 10 may be in the form of a waterproof water tank booth storage rack capable of self-extinguishing fire when a fire occurs. The charging/storage apparatus 10 may include a control module 11, a communication module 12, a charging/storage management module 13, and a fire management module 14.

The control module 11 is a module that manages/controls the overall operation of the charging/storage apparatus 10 proposed/described in the present disclosure and may be referred to as a controller, a microcontroller, a microprocessor, or a microcomputer. One or more processors 102 and 202 may be implemented by hardware, firmware, software, or a combination thereof.

The communication module 12 is a module that performs overall transmission and reception of wireless signals in the charging/storage apparatus 10 proposed/described in the present disclosure and may include a transmitter and/or a receiver.

The charging/storage management module 13 may correspond to a module for managing/controlling charging and storage of mobility products in the charging/storage apparatus 10 proposed/described in the present disclosure. For example, the charging/storage management module 13 may manage/control overall operations for locking/unlocking of the storage rack, start/end of charging, and removal of the mobility products.

The fire management module 14 may be a module for managing detection, alarm notification, and fire extinguishment when a fire occurs. The fire management module 14 may include a fire detection module 14a for managing fire detection through a sensor, a detector, and the like for detecting a fire when a fire occurs, a fire alarm module 14b for managing the transmission of an alert alarm, a fire occurrence notification to a fire station/user, and the like when a fire occurs, and a cooling control module 14c for managing cooling water injection/discharge for fire extinguishment.

Next, the central control apparatus 20 may correspond to an external device and/or a server for controlling operations related to charging/storage and fire extinguishment of the charging/storage apparatus 10. The central control apparatus 20 may include a control module 21, a communication module 22, a data management module 23, and a payment management module 24.

The control module 21 is a module that manages/controls the overall operation of the central control apparatus 20 proposed/described in the present disclosure and may be referred to as a controller, a microcontroller, a microprocessor, or a microcomputer. One or more processors 102 and 202 may be implemented by hardware, firmware, software, or a combination thereof.

The communication module 22 is a module that performs overall transmission and reception of wireless signals in the central control apparatus 20 proposed/described in the present disclosure and may include a transmitter and/or a receiver.

The data management module 23 may correspond to a module for managing data with respect to the charging/storage apparatus 10 (e.g., the storage rack) and/or data with respect to the user apparatus 30 (e.g. the user terminal and the like). For example, the data management module 23 may manage data with respect to a location of the storage rack, whether the storage rack is used, etc. and may manage data on identification information (e.g. ID), use information, etc. of a user terminal accessed to use the storage rack.

The payment management module 24 may correspond to a module for managing/controlling a payment system related to the use of the charging/storage apparatus 10. For example, the payment management module 24 may manage payment for use of the storage rack requested by the user terminal, additional payment due to exceeding the storage period, etc.

Next, the user apparatus 30 is an apparatus operated by a user to use the charging/storage apparatus 10 and may include a smartphone, a tablet, wearable device, a notebook, a laptop, etc., which may be connected to the charging/storage apparatus 10 and/or the central control apparatus 20 via wireless communication. For example, the user may access a program for using the storage rack through the user apparatus 30 and may perform operations such as search/selection of a location of the storage rack, setting of a storage period thereof, and payment for use of the storage rack. In addition, the user may receive a notification of charging completion/excess of storage period, an alert notification due to fire occurrence, etc. through the user apparatus 30.

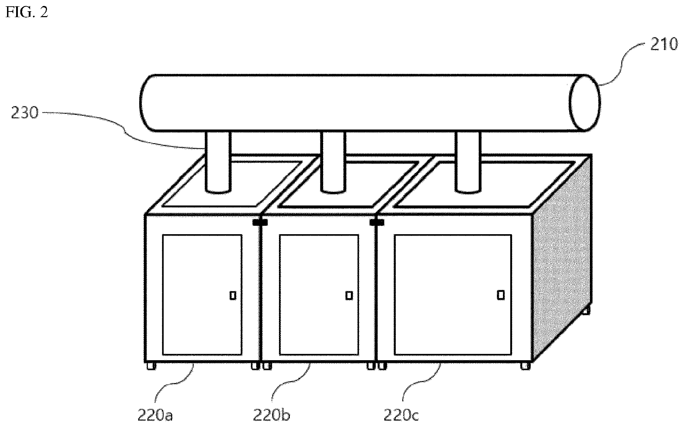

FIGS. 2 to 4, which will be described below, illustrate an example of the charging/storage apparatus 10. A perspective view, a front view, and a side view illustrated in FIGS. 2 to 4 represent an example for describing operations of the charging/storage apparatus 10 proposed in the disclosure and may be expanded/changed to be interpreted/applied to other structures for implementing the technical idea of the operations of the charging/storage apparatus 10 proposed in the disclosure in the same/similar manner.

FIG. 2 illustrates a perspective view of the mobility product charging/storage apparatus to which the present disclosure may be applied. FIG. 2 is for convenience of description and is not intended to limit the scope of the present invention in the present disclosure.

Referring to FIG. 2, the charging/storage apparatus 10 may include a fire-extinguishing tank 210 that is located at an upper layer portion thereof to enable fire extinguishment, charging/storage booths 220 (i.e., 220A, 220B, and 220C) located at a lower portion to enable charging/storage and fire extinguishment, and discharge tubes 230 each connecting the fire-extinguishing tank 210 with each charging/storage booth 220.

The fire-extinguishing tank 210 may correspond to a reservoir and/or a passage for storing/moving cooling water required for extinguishing fire. The tank allows smoke to escape to the outside in the event of a fire and may be designed/manufactured as a fire-resistant insulating structure made of metal that can withstand the fire temperature.

As illustrated in FIG. 2, one or more charging/storage booths 220a, 220b, and 220c may be installed. Each charging/storage booth may correspond to a waterproof sealed insulation type water tank storage rack and may be constructed with a waterproof and sealed structure so that cooling water does not flow out of the booth after the cooling water is injected into the booth.

The heights of the charging/storage booths may all be designed to be the same (or the heights may be designed to be different as required), and the size of width/depth may be designed to be different depending on the characteristics of the mobility product to be charged/stored. As a result, the charging/storage apparatus 10 proposed in the present disclosure may support various types of mobility products (e.g., electric kickboards, electric bicycles, electric scooters, electric vehicles, etc.).

In addition, each charging/storage booth operates individually and may be configured with a structure to be fixed and coupled between the booths. The number of charging/storage booths may be adjusted in consideration of the storage demand for mobility products. Additionally, in consideration of a storage area of the mobility product, a space having a small storage area for the mobility product may be configured with a layered structure and/or a partition structure.

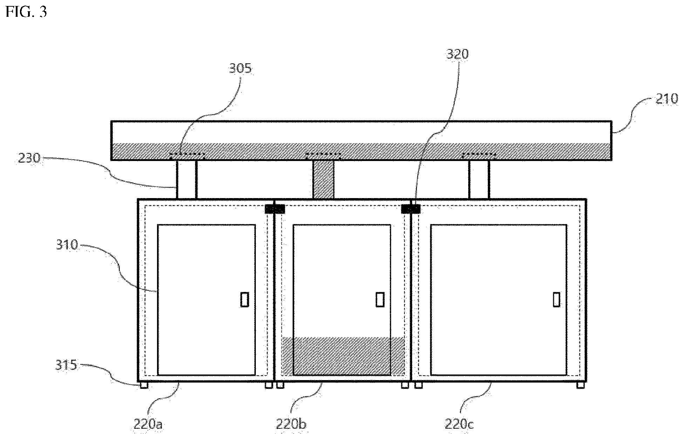

FIG. 3 illustrates a front view of the mobility product charging/storage apparatus to which the present disclosure may be applied. FIG. 3 is for convenience of description and is not intended to limit the scope of the present invention in the present disclosure.

Referring to FIG. 3, a discharge lever 305 may be installed on each of the discharge tubes 230. Cooling water injection into each water tank may be controlled according to the operation of the discharge lever 305.

An entrance door 310 may be installed at the front of each of the charging/storage booths 220a, 220b, and 220c, may be designed to have a waterproof structure, and may be designed to withstand the pressure of cold cooling water within the booth. In addition, the entrance door 310 may be designed in various ways in consideration of the size of the mobility product to be used in the charging/storage booth.

In addition, a wheel-type wheel lever 315 may be installed on each of the charging/storage booths 220a, 220b, and 220c to facilitate addition, separation, fixation, and movement of the booth, and a fixing lever 320 for coupling between the charging/storage booths may be installed thereon. Through the corresponding functions, it is possible to adopt a way of separating and moving only the charging/storage booth in which a fire occurs and to adopt a structure in which secondary damage to other stored products due to the fire is prevented and minimized.

As illustrated in FIG. 3, when a fire occurs in the second charging/storage booth 220b, the discharge lever 305 is operated only for the corresponding charging/storage booth so that cooling water can be injected thereinto, and in this case, the other charging/storage booth(s) may be independently separated and moved to another location.

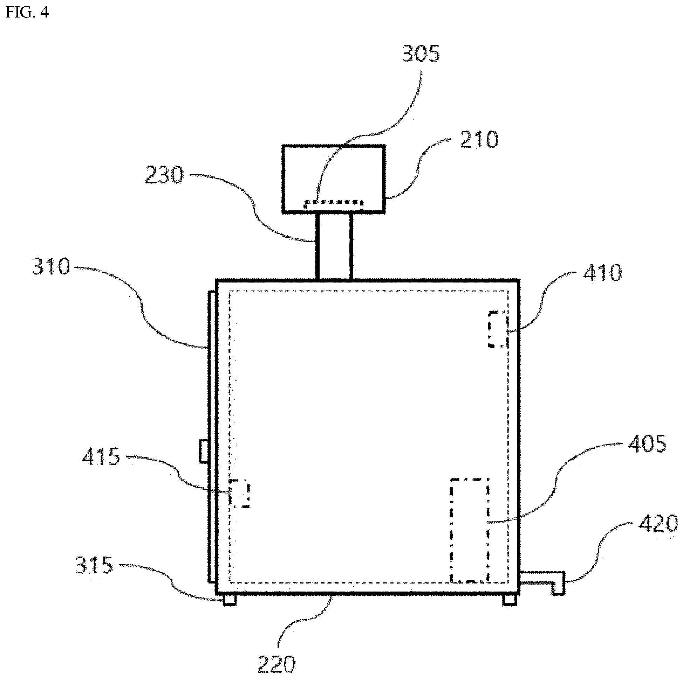

FIG. 4 illustrates a side view of the mobility product charging/storage apparatus to which the present disclosure may be applied. FIG. 4 is for convenience of description and is not intended to limit the scope of the present invention in the present disclosure.

Referring to FIG. 4, each charging/storage booth 200 may include a charging device 405 for charging a mobility product, a fire detection device 410, a cooling water detection device 415, and a cooling water outlet 420. Here, the fire detection device 410 may be a device included in or managed by the fire detection module 14a, and the cooling water detection device 415 may be a device included in or managed by the cooling control module 14c.

For example, the fire detection device 410 may be installed on the side of the charging/storage booth 200 and may include a flame sensor, a photoelectric smoke sensor/detector, a constant temperature sensor/detector, etc. When a fire is detected by the fire detection device 410, the operation of the charging device 405 installed in the corresponding charging/storage booth and other charging/storage booth(s) may be stopped/blocked. In addition, through signal processing within the charging/storage apparatus 10, the discharge lever 305 for the charging/storage booth where a fire is detected may be opened. Accordingly, the cooling water contained in the fire-extinguishing tank 210 may be injected into the booth through the discharge tube 230 by gravity, and the fire may be extinguished.

In this case, when a specific (i.e., preset) height (e.g., 1 meter)/amount of cooling water is injected, the cooling water detection device 415 may detect that sufficient cooling water has been injected, and additional cooling water injection may be stopped by controlling the discharge lever 305 to be submerged within the charging/storage apparatus 10 through signal processing. In addition, when it is determined that thermal runaway has stopped as the temperature of a battery submerged in water decreases and the fire is extinguished, the cooling water within the corresponding booth may be discharged through the cooling water outlet 420 installed at the lower end of the charging/storage booth. Here, the cooling water outlet 420 may be designed to be manually adjusted or automatically adjusted according to a predetermined criterion based on a system or the like.

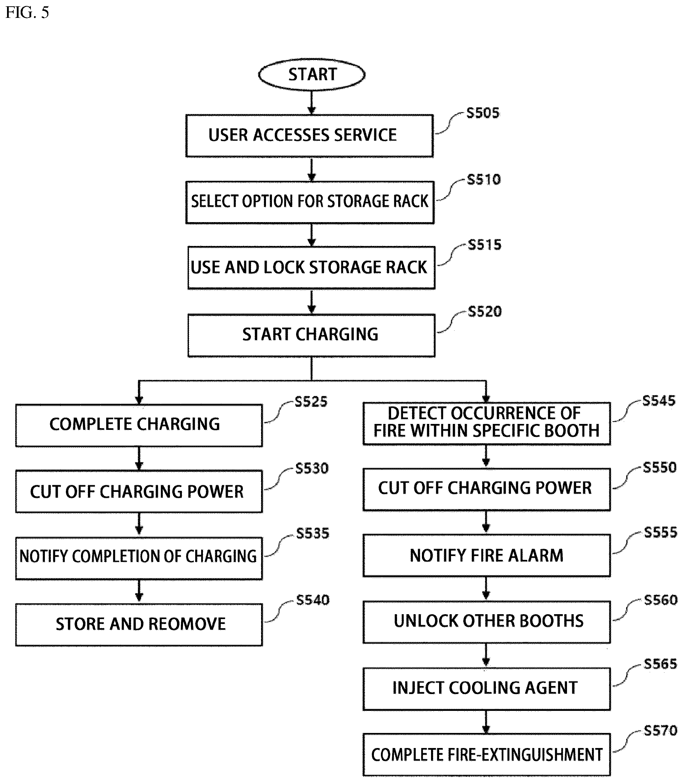

FIG. 5 illustrates an operation flowchart of the mobility product charging/storage apparatus to which the present disclosure may be applied. FIG. 5 is for convenience of description and is not intended to limit the scope of the present invention in the present disclosure.

Referring to FIG. 5, based on the structures of the above apparatus(es) described with reference to FIG. 1 and the charging/storage apparatus 10 described with reference to FIGS. 2 to 4, self-extinguishing of fire may be made possible in the charging/storage booth when a fire occurs in a charging/storage booth.

In operation S505, a user may access a service for charging/storage of the mobility product through the user apparatus 30. For example, a user may access a wired/wireless communication network through a user communication device (e.g., a smart phone) and access a charging/storage service operated based on the central control apparatus 20 or the like. The user may install a program for using the charging/storage service and proceed with membership registration.

In operation S510, the user may select options for a charging/storage booth of the charging/storage apparatus 10 through the user apparatus 30. For example, through a user's communicator device, the user may search for the location of a storage rack for charging the user's mobility product (i.e., a charging/storage booth of the charging/storage apparatus 10) and select a storage rack in which charging of the mobility product is to be performed. In addition, the user may set/select a storage period for using the corresponding storage rack and proceed with a payment procedure for cost according to the setting/selection.

In operation S515, the user may perform a use and lock procedure for the storage rack selected by the user. For example, the user may input his/her identification information (e.g., ID) with respect to the selected storage rack, and accordingly, a locking device of the storage rack may be released. The user may move the mobility product intended to be charged into the storage rack and may connect a charger (e.g., a charging device 405) suitable for the corresponding mobility product thereto.

According to the above-described procedure, the storage rack may be switched to a use and lock state, and in operation S520, charging of the mobility product may be initiated.

When a fire does not occur, charging of the mobility product may be completed by a suitable procedure as provided in operation S525. In this case, in operation S535, the charging/storage apparatus 10 may transmit a notification that charging has been completed to the user (i.e., the user apparatus 30) directly and/or through the central control apparatus 20. When charging is completed, power of the charger is automatically cut off, and information on the corresponding matter may be transmitted to and received from the user in real time. In addition, even before charging is completed, real time charging information may be transmitted to the user through a wired/wireless transmission/reception communication module once charging starts. Based on the real time charging information, the user may optionally stop the charging.

Thereafter, as provided in operation S540, the storage and removal operations of the mobility product may be performed based on the storage period and the like set by the user.

For example, when the storage period has expired/been exceeded, the charging/storage apparatus 10 may transmit a notification that the storage period for the mobility product has expired/been exceeded to the user (i.e., user apparatus 30) directly and/or through the central control apparatus 20. In this case, the user may determine whether to additionally use the storage rack. When the user has paid a cost for an additional storage period, the storage rack for the corresponding mobility product is again switched to the locked state and storage of the mobility product extends for a period of time that is as long as the additional payment that has been made, and after the extended period of time, the corresponding mobility product may be removed (i.e. the storage rack may be opened). On the other hand, when the user does not pay for the cost for the additional storage period, the use of the storage rack for the corresponding mobility product is terminated, and the corresponding mobility product may be removed (i.e., the storage rack is opened) immediately.

In contrast, when it is detected that a fire has occurred within a specific charging/storage booth (i.e., operation S545), in operation S550, the charging/storing apparatus 10 may cut off charging power for all charging/storage booths. For example, when a fire is detected through the fire sensor (e.g., the fire detection device 410) installed in the storage rack booth, power of the charging power unit for all products within the storage rack booth where it is recognized that a fire has occurred may be cut off through the management control unit (e.g., the control module 11 of the charging/storage apparatus 10) of the storage rack.

In operation S555, the charging/storage apparatus 10 may transmit an alert about the fact of fire directly and/or through the central control apparatus 20. For example, the charging/storage apparatus 10 may activate a fire alarm that has been installed on its own. In addition, the charging/storage apparatus 10 may transmit and receive (in real time) information about the occurrence of a fire (in real time) to the user, the fire station, and/or the like directly and/or through the central control apparatus 20.

In operation S560, the charging/storage apparatus 10 may release locking of other booths directly and/or through the central control apparatus 20. For example, when a fire occurs in a specific booth, locking of the doors of other booths may be released, and thus the mobility product being charged/stored may be removed.

In operation S565, the discharge lever 305 for the charging/storage booth where the fire has occurred is opened, and accordingly, the cooling agent may be injected into the booth by using the fire-extinguishing tank 210 and the discharge tube 230 at the upper portion thereof. For example, when a predetermined height/amount of cooling water is injected, the cooling water detection device 415 detects that sufficient cooling water has been injected, and additional cooling water injection may be stopped.

Although operations S550 to S565 are illustrated as being performed sequentially in FIG. 5, it is obvious that operations S550 to S565 may be performed simultaneously or in a different order by changing the order of the operations based on the situation and/or system settings.

According to the above-described procedure, fire extinguishment within a specific charging/storage booth may be completed as provided in operation S570. For example, as the temperature of the battery submerged in cooling water is lowered, the thermal runaway is stopped, and when it is determined that the fire has been extinguished, the cooling water in the corresponding booth may be discharged through the cooling water outlet 420 installed at the lower end of the charging/storage booth.

Through the apparatus and method proposed in the present disclosure, a charging/storage apparatus for self-extinguishing fire may be designed, and the spread of fire can be prevented and damage to life and property may be minimized by using the corresponding charging/storage apparatus.

The above-described embodiments are those in which the components and features of the present disclosure are combined in a predetermined form. Each component or feature should be considered as being optional unless specified otherwise. Each component or feature may be implemented in a form that is not combined with other components or features. In addition, it is possible to configure the embodiment of the present disclosure by combining some components and/or features. The order of the operations described in embodiments of the present disclosure may be changed. Some components or features of an embodiment may be included in another embodiment or may be replaced with corresponding components or features of another embodiment. It is obvious that claims that do not have an explicit citational relationship in the scope of the claims may be combined to form an embodiment or included as new claims through an amendment after filing thereof.

It is obvious to those skilled in the art that the present disclosure may be embodied in other specific forms without departing from essential features of the present disclosure. Accordingly, the above-described detailed description should not be construed as restrictive in all respects and should be considered as illustrative. The scope of the present disclosure should be determined by a reasonable interpretation of the appended claims, and all changes within an equivalent scope of the present disclosure may be included within the scope of the present disclosure.

### [Industrial Applicability]

The present disclosure can be applied to various charging systems.

## Claims

1. A mobility product charging apparatus having a fire-extinguishing function, comprising:
a fire-extinguishing tank 210 which is located at an upper portion and is for storing and moving a cooling agent for extinguishing fire; and
one or more charging booths which are located at a lower portion and designed for charging and storing mobility products,
wherein the fire-extinguishing tank 210 and each of the one or more charging booths are connected through a discharge tube 230, and
when a fire occurs in a specific charging booth from among the one or more charging booths, charging of a mobility product in the specific charging booth is blocked and a discharge lever (350) corresponding to the specific charging booth is automatically opened so that the cooling agent is injected from the fire-extinguishing tank (210) to the specific charging booth through the discharge tube and the fire-extinguishing function is performed.

2. The mobility product charging apparatus of claim 1, wherein the one or more charging booths are connected and fixed to each other through a fixing lever (320), and
each of the one or more charging booths includes an entrance door (310) designed to be waterproof and sealable and includes a plurality of wheel levers (315) designed for separation, addition, and movement of a charging booth.

3. The mobility product charging apparatus of claim 1, wherein each of the one or more charging booths includes a fire detecting device for detecting an occurrence of a fire and a cooling agent detecting device (415) for controlling a preset amount of cooling agent injection, and
when the preset amount of cooling agent injection is detected by the cooling agent detecting device (415), the cooling agent injection into the specific charging booth is set to be stopped.

4. The mobility product charging apparatus of claim 1, wherein each of the one or more charging booths includes a cooling water outlet (420) for discharging injected cooling water after the fire-extinguishing function is completed, and
the cooling agent outlet (420) is manually opened or closed or is designed to be automatically opened and closed when preset in a system.

5. The mobility product charging apparatus of claim 1, wherein, when a fire occurs within the specific charging booth, a notification indicating the occurrence of the fire is set to be transmitted to a user of the specific charging booth.

6. The mobility product charging apparatus of claim 1, wherein, when a fire occurs within the specific charging booth, all charging power for the one or more charging booths is set to be cut off, entrance doors (310) of the remaining charging booths excluding the specific charging booth are set to be opened, and only the specific charging booth in which the fire has occurred is deigned to be separated and movable.

7. The mobility product charging apparatus of claim 6, wherein a notification indicating the occurrence of the fire and removal of the mobility products is set to be transmitted to a user of the remaining charging booths.

8. The mobility product charging apparatus of claim 1, wherein heights of the one or more charging booths are designed to be the same,
a horizontal length and a vertical length of bottoms of the one or more charging booths are variously designed in consideration of characteristics of the mobility products, and
the one or more charging booths are designed to optionally add and separate a charging booth according to a demand for the charging booth and designed to add the charging booth in a layered structure in consideration of a storage area of mobility products.
